# EUROPEAN PATENT APPLICATION

(11) **EP 3 742 573 A1**
(43) Date of publication of application: **25.11.2020**
(21) Application number: 20172841.7
(22) Date of filing: 05.05.2020
(51) Int. Cl.: H02J 7/00

(54) **METHOD AND SYSTEM FOR CHARGING POWER STORAGE DEVICE**

(30) Priority: 23.05.2019 JP 2019096535
(71) Applicant: YAZAKI CORPORATION, Minato-ku, Tokyo 108-8333 (JP)
(72) Inventor: IIMURO, Shigeki, Shizuoka, 410-1194 (JP)
(74) Representative: Grünecker Patent- und Rechtsanwälte PartG mbB

(57) **Abstract**

When charging a plurality of power storage devices for supplying power to a load with one charging device, for each charge amount of the plurality of power storage devices, a predetermined upper limit and a predetermined lower limit are set, the charge amount of each of the plurality of power storage devices is monitored, and supplying power from the charging device to the power storage device whose charge amount has reached the predetermined upper limit is stopped. When the charge amount of the power storage device whose power supply has been stopped reaches the predetermined lower limit, power supply from the charging device to this power storage device is restarted.

## Description

### Technical Field

The present invention relates to a method and a system for charging a power storage device.

### Background Art

There is a case where a plurality of batteries for electric devices are mounted (Patent Literature 1). In general, when the output voltage of a generator or another battery is high, the battery for an electric device is charged by electricity whose voltage has been lowered by a charging device (for example, a DC-DC converter).

The batteries for a plurality of electric devices may have different states such as initial conditions, and may have different characteristics such as types, capacities, and deterioration levels, for each battery. When charging the plurality of batteries having different states and characteristics as described above, one charging device cannot perform optimal charging control for all the batteries. For this reason, when the plurality of batteries is charged by a single charging device, some batteries may be overcharged or some batteries may be undercharged.

### Prior Art Document

### Patent Literature

Ptent Literature 1: JP H10-229649 A

### Summary of Invention

### Technical Problem

Therefore, a method of adding a charging device so that one charging device corresponds to each of a plurality of batteries can be considered. In this way, it becomes possible for each of the plurality of charging devices to control the charging so that the corresponding battery does not become overcharged or undercharged, and it becomes possible to prevent the occurrence of overcharged batteries and undercharged batteries.

However, the addition of the charging device increases the cost, and requires a large space for installation. Such a problem can occur not only in the battery but also in the power storage device in general.

The present invention has been made in view of the above background, and an object of the present invention is to charge a plurality of power storage devices having different states and characteristics while preventing overcharging and undercharging with an inexpensive and space-saving configuration.

### Solution to Problem

According to a first aspect of the present invention, there is provided a charging method of charging a plurality of power storage devices for supplying power to a load with one charging device comprising the steps of:
setting a predetermined upper limit value and a predetermined lower limit value for each charge amount of the plurality of power storage devices; and
charging the plurality of power storage devices,
wherein the charging the plurality of power storage devices includes the steps of:
   monitoring each charge amount of the plurality of power storage devices;
   stopping the power supply from the charging device to the power storage device whose charge amount has reached the predetermined upper limit value; and
   when the charge amount of the power storage device whose power supply has been stopped reaches the predetermined lower limit, restarting the power supply from the charging device to this power storage device. Further, each of the plurality of power storage devices may include one or more batteries.

According to another aspect of the present invention, there is provided a charging system comprising:
a plurality of power storage devices for supplying power to a load;
a charging device for supplying power to the plurality of power storage devices;
a plurality of switches provided between the plurality of power storage devices and the charging device, corresponding to each of the plurality of power storage devices; and
a control unit for controlling on and off of the plurality of switches,
wherein the control unit monitors each charge amount of the plurality of power storage devices, and controls the plurality of switches such that when the charge amount of the corresponding power storage device reaches a predetermined upper limit set for this corresponding power storage device, the switch is turned off, and after the switch is turned off, when the charge amount of the corresponding power storage device reaches a predetermined lower limit set for this corresponding power storage device, the switch is turned on. Further, each of the plurality of power storage devices may include one or more batteries.

### Effect of the Invention

According to the embodiment described above, a plurality of power storage devices having different states and characteristics can be charged while preventing overcharging and undercharging with an inexpensive and space-saving configuration.

### Brief Description of Drawings

FIG. 1 is a diagram showing a charging system 100 according to an embodiment of the present invention;
FIG. 2 is a diagram showing a change over time of SOC in an example of the charging system 100 shown in FIG. 1; and
FIG. 3 is a diagram showing an example of charge control of batteries 110a to 110c by a control unit 140 shown in FIG. 1.

### Description of Embodiments

### < Charging system 100 >

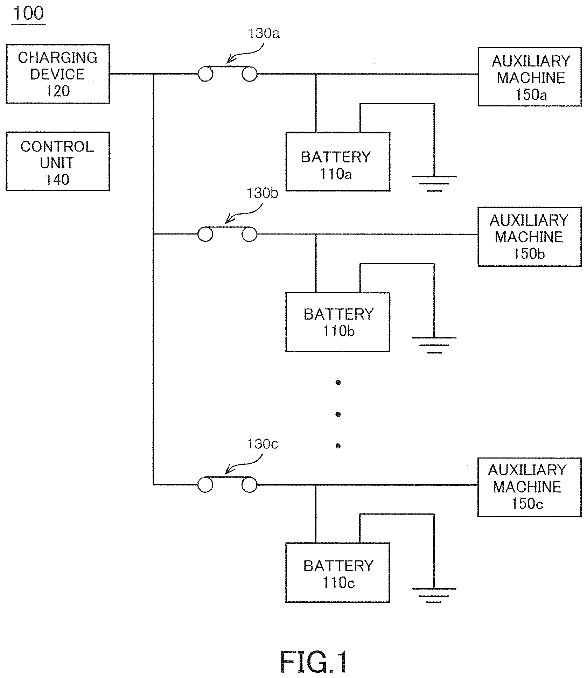

FIG. 1 is a diagram showing a charging system 100 according to an embodiment of the present invention. The charging system 100 includes a plurality of batteries 110a to 110c, a charging device (for example, a DC-DC converter) 120 that supplies power to the plurality of batteries 110a to 110c, a plurality of switches 130a to 130c, and a control unit 140 for controlling on/off of the switches 130a to 130c. Each of the plurality of batteries 110a to 100c is a battery for supplying power to the electric devices 150a to 150c.

Each of the plurality of switches 130a to 130c corresponds to one of the plurality of batteries 110a to 110c, and is connected between the corresponding battery 110a to 110c and the charging device 120. Therefore, when switches 130a to 130c are on, charging devices 120 and corresponding batteries 110a to 110c are connected, and charging device 120 can supply power to corresponding batteries 110a to 110c. On the other hand, when the switches 130a to 130c are off, the connection between the charging device 120 and the corresponding batteries 110a to 110c is interrupted, and the power cannot be supplied from the charging device 120 to the corresponding batteries 110a to 110c.

The charge amount of each of the plurality of batteries 110a to 110c can be monitored by using, for example, an SOC (State of Charge). The SOC of each of the plurality of batteries 110a to 110c can be obtained by measuring the voltage across each of the plurality of batteries 110a to 110c and the discharge flow by sensors provided in each of the plurality of batteries 110a to 110c.

The control unit 140 monitors the charge amount of each of the plurality of batteries 110a to 110c, and controls on/off of the corresponding switches 130a to 130c based on the charge amount of the batteries 110a to 110c. That is, the control unit 140 independently controls the charging of each of the plurality of batteries 110a to 110c based on the charge amount of each of the plurality of batteries 110a to 110c.

The control unit 140 turns on the corresponding switches 130a to 130c for each of the batteries 110a to 110c at the time of charging and from the start of charging until the charge amount of the batteries 110a to 110c reaches a predetermined upper limit. Then, when the charge amount of the batteries 110a to 110c reaches a predetermined upper limit, the control unit 140 turns off corresponding switches 130a to 130c and stops power supply from the charging device 120 to the batteries 110a to 110c.

That is, in the present embodiment, when the charge amounts of the batteries 110a to 110c reach the predetermined upper limit, the power supply to the batteries 110a to 110c is stopped. Thereby, in the present embodiment, it is possible to prevent power from being continuously supplied to the fully charged batteries 110a to 110c, that is, prevent the batteries 110a to 110c from being overcharged.

When the corresponding switches 130a to 130c are turned off, the batteries 110a to 110c start discharging because the batteries 110a to 110c are connected to the corresponding electric devices 150a to 150c. Therefore, after the corresponding switches 130a to 130c are turned off, the charge amounts of the batteries 110a to 110c decrease. Therefore, the control unit 140 turns on the switches 130a to 130c when the charge amounts of the batteries 110a to 110c reach a predetermined lower limit after the corresponding switches 130a to 130c are turned off, and the power supply from the charging device 120 to the batteries 110a to 110c is restarted.

That is, in the present embodiment, when the charge amounts of the batteries 110a to 110c reach the predetermined lower limit, power supply to the batteries 110a to 110c is restarted. Therefore, in the present embodiment, it is possible to prevent the batteries 110a to 110c from being continuously discharged, that is, prevent the batteries 110a to 110c from being undercharged.

As described above, in the present embodiment, the power supply from the charging device 120 is controlled for each of the batteries 110a to 110c. Therefore, in the present embodiment, the charge control of each of the batteries 110a to 110c is not affected by the charge state of the other batteries 110a to 110c, and it is possible to keep the charge amount of each of the batteries 110a to 110c within a predetermined range. Therefore, in the present embodiment, it is possible to charge a plurality of batteries having different states and characteristics while preventing overcharge and undercharge.

The upper limit value and the lower limit value of the charge amount of each of the plurality of batteries 110a to 110c are set based on the characteristics, use requirements, and the like of each of the plurality of batteries 110a to 110c. That is, in the present embodiment, the upper limit value and the lower limit value of the charge amount may be different for each of the batteries 110a to 110c. In this way, in the present embodiment, the charge amounts of the batteries 110a to 110c can be kept within a predetermined value range so as to match the characteristics, use requirements, and the like of each of the batteries 110a to 110c.

As shown in FIG. 1, only one control unit 140 may be provided, and one control unit 140 may control all the switches 130a to 130c.

Further, the control unit may be provided for each of the switches 130a to 130c, and each of the control units 130 may control only the corresponding switch 130a to 130c.

As described above, in the present embodiment, it is possible to charge a plurality of batteries having different states and characteristics while preventing overcharge and undercharge. Further, in the present embodiment, since only a switch is provided for each battery, it is possible to reduce the cost and installation space as compared with providing a charging device for each battery.

In the above embodiment, the device charged by the charging device 120 is a battery, but the device charged by the charging device 120 is not limited to a battery, and may be any device that can store electricity. Further, in the above embodiment, each of the plurality of switches is provided for each one battery, but each of the plurality of switches 130a may be provided for each battery group including two or more batteries.

### < Time change of SOC >

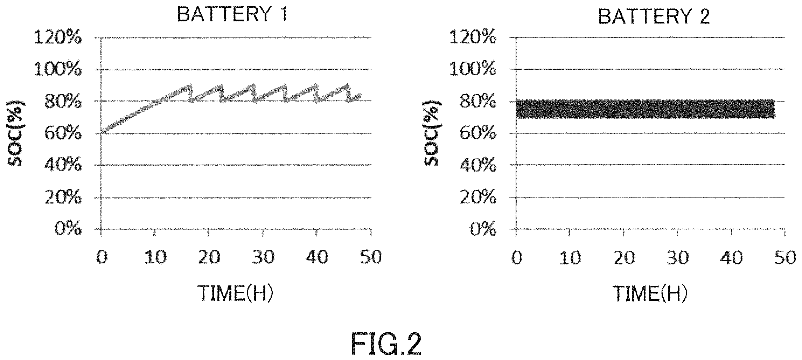

FIG. 2 is a diagram illustrating a time change of the SOC in an example of the charging system 100 according to the present embodiment. In this example, the charging system 100 includes two batteries, a battery 1 and a battery 2. The battery 1 is a lead storage battery, and has a voltage of 12.35 V when the SOC is 95%, an initial SOC of 61%, and a capacity of 63 Ah. The battery 2 is a lithium ion battery, and has a voltage of 13.45 V when the SOC is 95%, an initial SOC of 70%, and a capacity of 43 h. That is, in this example, the charging system 100 has two batteries, the battery 1 and the battery 2, having different characteristics and states from each other. In this example, battery 1 has an upper limit of SOC of 89.5% and a lower limit of SOC of 80%, and battery 2 has an upper limit of 80% of SOC and a lower limit of SOC of 70%. That is, the charge amount of the battery 1 and the charge amount of the battery 2 are controlled so as to be maintained in different ranges.

FIG. 2 shows that the SOC values of the battery 1 and the battery 2 oscillate within the respective ranges by controlling the SOC values of the battery 1 and the battery 2 by the charge control of the present embodiment. That is, in the battery 1, when the SOC value reaches the upper limit value of 89.5%, the power supply from the charging device is stopped and the battery 1 discharges to the load, so that the SOC value starts to decrease. Thereafter, when the value of the SOC reaches the lower limit of 80%, the power supply from the charging device is restarted, and the value of the SOC starts to increase again. Similarly, in the battery 2, when the SOC value reaches the upper limit of 80%, the power supply from the charging device is stopped, and the battery 2 discharges to the load, so that the SOC value starts to decrease. Thereafter, when the SOC value reaches the lower limit of 70%, the power supply from the charging device is restarted, and the SOC value starts to increase again.

As described above, in the present embodiment, it is possible to charge a plurality of batteries having different states and characteristics while preventing overcharge and undercharge. Further, in the charging system 100 according to the present embodiment, it is possible to keep the charge amounts of the plurality of batteries in different ranges for each battery.

### < Charge control of batteries 110a to 110c >

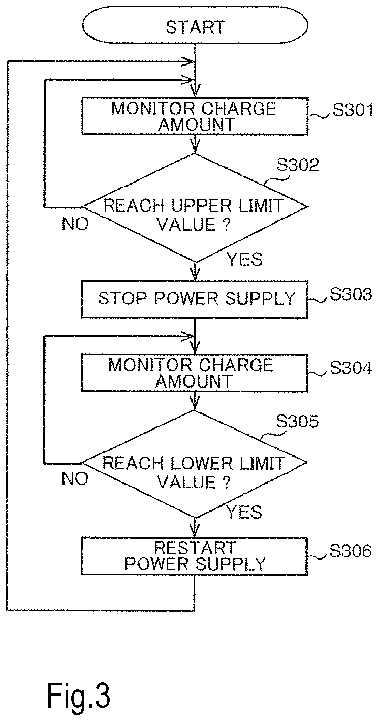

FIG. 3 is a diagram illustrating an example of charging control of the batteries 110a to 110c by the control unit 140 of the charging system 100 according to the present embodiment. As described above, in the present embodiment, the control unit 140 independently controls the charging of each of the batteries 110a to 110c. FIG. 3 shows charge control of one of batteries 110a to 110c by control unit 140. The control unit 140 performs the control shown in FIG. 3 on each of the batteries 110a to 110c.

The control unit 140 monitors the charge amounts of the batteries 110a to 110c (step S301), and when the charge amount reaches the predetermined upper limit (Yes in step S302), the corresponding switches 130a to 130c are turned off, and the power supply from the charging device 120 to the batteries 110a to 110c is stopped (step S303). Thereafter, the charge amounts of the batteries 110a to 110c are monitored (step S304). When the charge amounts of the batteries 110a to 110c reach the predetermined lower limit (Yes in step S305), the corresponding switches 130a to 130c are turned on, and the power supply from the charging device 120 to the batteries 110a to 110c is restarted (step S306), and the control returns to step S301.

The present invention has been described with reference to the preferred embodiments of the present invention. Although the invention has been described with reference to specific embodiments, various modifications and changes can be made to these embodiments without departing from the spirit and scope of the invention as set forth in the appended claims.

### Reference Signs List

- 100: charging system
- 110a-110c: battery
- 120: charging device
- 130a-130c: switch
- 140: control unit
- 150a-150c: electric device

## Claims

1. A charging method of charging a plurality of power storage devices for supplying power to a load with one charging device comprising the steps of:
setting a predetermined upper limit value and a predetermined lower limit value for each charge amount of the plurality of power storage devices; and
charging the plurality of power storage devices,
wherein the charging the plurality of power storage devices includes the steps of:
monitoring each charge amount of the plurality of power storage devices;
stopping power supply from the charging device to the power storage device whose charge amount has reached the predetermined upper limit value; and
when the charge amount of the power storage device whose power supply has been stopped reaches the predetermined lower limit, restarting the power supply from the charging device to this power storage device.

2. The charging method claimed in claim 1,
wherein each of the plurality of power storage devices includes one or more batteries.

3. A charging system comprising:
a plurality of power storage devices for supplying power to a load;
a charging device for supplying power to the plurality of power storage devices;
a plurality of switches provided between the plurality of power storage devices and the charging device, corresponding to each of the plurality of power storage devices; and
a control unit for controlling on and off of the plurality of switches,
wherein the control unit monitors each charge amount of the plurality of power storage devices, and controls the plurality of switches such that when the charge amount of the corresponding power storage device reaches a predetermined upper limit set for this corresponding power storage device, the switch is turned off, and after the switch is turned off, when the charge amount of the corresponding power storage device reaches a predetermined lower limit set for this corresponding power storage device, the switch is turned on.

4. The charging system claimed in claim 3,
wherein each of the plurality of power storage devices includes one or more batteries.
